# EUROPEAN PATENT APPLICATION

(11) **EP 4 468 771 A1**
(43) Date of publication of application: **27.11.2024**
(21) Application number: 22921038.0
(22) Date of filing: 18.01.2022
(51) Int. Cl.: H04W 24/02

(54) **OPERATION TRIGGERING METHOD AND APPARATUS, AND STORAGE MEDIUM**

(71) Applicant: Beijing Xiaomi Mobile Software Co., Ltd., Beijing 100085 (CN)
(72) Inventor: LI, Xiaolong, Beijing 100085 (CN); XIONG, Yi, Beijing 100085 (CN)
(74) Representative: Dehns Germany Partnerschaft mbB
(86) International application number: PCT/CN2022/072574
(87) International publication number: WO 2023/137589

(57) **Abstract**

Provided in the present disclosure are an operation triggering method and apparatus, and a storage medium. The operation triggering method comprises: receiving target information sent from a network-side device, wherein the target information is used for a terminal to determine a trigger condition for triggering a radio resource control (RRC) reestablishment operation and/or a neighbor cell measurement operation, and in response to the trigger condition being satisfied, executing the RRC reestablishment operation and/or the neighbor cell measurement operation. The present disclosure provides a new trigger condition for triggering a terminal to execute an RRC re-establishment operation and/or a neighbor cell measurement operation, reduces the probability of terminal service interruption, improves the continuity of a terminal service of a non-terrestrial network, and has high availability.

## Description

### TECHNICAL FIELD

The disclosure relates to a field of communication, and more particularly, to a method and apparatus for triggering an operation, and a storage medium.

### BACKGROUND

Non-Terrestrial Networks (NTN) may include an Internet of Things (IoT) NTN and a New Radio (NR) NTN. The IoT NTN further includes a Narrow Band Internet of Things (NB-IOT) NTN and an enhanced Machine Type Communication (eMTC) NTN.

Currently, for some methods for triggering a terminal to perform Radio Resource Control (RRC) re-establishment by detecting a Radio Link Failure (RLF), due to a movement and propagation delay of a satellite, the terminal may be unable to detect the RLF in time to perform the RRC re-establishment, resulting in service interruption. In particular, for an NB-IoT terminal, measurement cannot be performed on a neighboring cell the RLF is detected, which has a significant impact on the terminal service.

### SUMMARY

In order to overcome the problems existing in the related art, embodiments of the disclosure provide a method and apparatus for triggering an operation, and a storage medium.

According to a first aspect of embodiments of the disclosure, a method for triggering an operation is provided. The method is performed by a terminal, and includes:
receiving target information sent by a network device; in which the target information is used by the terminal to determine a trigger condition for triggering a radio resource control (RRC) re-establishment operation and/or a neighboring cell measurement operation; and
in response to the trigger condition being satisfied, performing the RRC re-establishment operation and/or the neighboring cell measurement operation.

Optionally, receiving the target information sent by the network device includes at least one of the following:
receiving a system message including the target information sent by the network device; or
receiving an RRC message including the target information sent by the network device.

Optionally, the target information includes time information or location information.

Optionally, the time information is used to indicate a target time point, and the target time point includes any one of the following:
a first time point at which a serving cell ends a service; or
a second time point used to trigger the terminal to perform the RRC re-establishment operation and/or the neighboring cell measurement operation.

Optionally, in response to the trigger condition being satisfied, performing the RRC re-establishment operation and/or the neighboring cell measurement operation includes any one of the following:
in response to an arrival of the target time point indicated by the time information, performing the RRC re-establishment operation and/or the neighboring cell measurement operation; and
performing the RRC re-establishment operation and/or the neighboring cell measurement operation before an arrival of the target time point indicated by the time information,.

Optionally, the method further includes:
determining a first time period based on association time information and the target time point; in which the association time information is used to indicate a time offset value corresponding to the target time point; and
in response to the trigger condition being satisfied, performing the RRC re-establishment operation and/or the neighboring cell measurement operation includes:
performing the RRC re-establishment operation and/or the neighboring cell measurement operation in the first time period.

Optionally, the association time information is used to indicate a time offset value corresponding to the first time point;
determining the first time period based on the association time information and the target time point includes:
determining a start time point of the first time period based on a difference between the first time point and the time offset value corresponding to the first time point; and
determining an end time point of the first time period based on the first time point.

Optionally, the association time information is used to indicate a start time point corresponding to the second time point;
determining the first time period based on the association time information and the target time point includes:
determining a time period from the start time point indicated by the association time information to the second time point as the first time period.

Optionally, the time information is used to indicate a target duration, and the target duration includes any one of the following:
a first duration in which the serving cell provides the service; or,
a second duration used to trigger the terminal to perform the RRC re-establishment operation and/or the neighboring cell measurement operation.

Optionally, the method further includes:
in response to receiving an RRC message including the time information sent by the network device, starting a timer; in which a timing duration of the timer is equal to the target duration indicated by the time information; and
in response to the trigger condition being satisfied, performing the RRC re-establishment operation and/or the neighboring cell measurement operation includes:
in response to determining that the timer expires, performing the RRC re-establishment operation and/or the neighboring cell measurement operation.

Optionally, the location information includes:
a reference location of a serving cell, and a first distance threshold between the terminal and the reference location of the serving cell; and/or,
a reference location of a neighboring cell, and a second distance threshold between the terminal and the reference location of the neighboring cell.

Optionally, in response to the trigger condition being satisfied, performing the RRC re-establishment operation and/or the neighboring cell measurement operation includes any one of:
in response to determining that a first distance value between the terminal and the reference location of the serving cell is greater than or equal to the first distance threshold, performing the RRC re-establishment operation and/or the neighboring cell measurement operation;
in response to determining that a second distance value between the terminal and the reference location of the neighboring cell is less than or equal to the second distance threshold, performing the RRC re-establishment operation and/or the neighboring cell measurement operation; or
in response to determining that the first distance value is greater than or equal to the first distance threshold, and the second distance value is less than or equal to the second distance threshold, performing the RRC re-establishment operation and/or the neighboring cell measurement operation.

Optionally, in response to the trigger condition being satisfied, performing the RRC re-establishment operation and/or the neighboring cell measurement operation includes any one of:
in response to determining that a first sum value of a first distance hysteresis value and a first distance value between the terminal and the reference location of the serving cell is greater than or equal to the first distance threshold, performing the RRC re-establishment operation and/or the neighboring cell measurement operation;
in response to determining that a second sum value of a second distance hysteresis value and a second distance value between the terminal and the reference location of the neighboring cell is less than or equal to the second distance threshold, performing the RRC re-establishment operation and/or the neighboring cell measurement operation; or
in response to determining that the first sum value is greater than or equal to the first distance threshold, and the second sum value is less than or equal to the second distance threshold, performing the RRC re-establishment operation and/or the neighboring cell measurement operation.

Optionally, in a case that the target information includes the location information, in response to the trigger condition being satisfied, performing the RRC re-establishment operation and/or the neighboring cell measurement operation includes:
in response to the trigger condition being satisfied in a second time period, performing the RRC re-establishment operation and/or the neighboring cell measurement operation.

Optionally, in response to the trigger condition being satisfied, performing the RRC re-establishment operation includes:
in response to a trigger condition for triggering the RRC re-establishment operation being satisfied and the terminal being not triggered to perform handover, performing the RRC re-establishment operation.

Optionally, the terminal being not triggered to perform the handover includes any one of the following:
not receiving an RRC re-configuration message used to perform the handover sent by the network device; or
not triggering Conditional HandOver (CHO).

According to a second aspect of embodiments of the disclosure, a method for triggering an operation is provided. The method is performed by a network device, and includes:
configuring target information for a terminal; in which the target information is used by the terminal to determine a trigger condition for triggering a radio resource control (RRC) re-establishment operation and/or a neighboring cell measurement operation; and
sending the target information to the terminal.

Optionally, sending the target information to the terminal includes at least one of the following:
sending a system message including the target information to the terminal; or
sending an RRC message including the target information to the terminal.

Optionally, the target information includes time information or location information.

Optionally, the time information is used to indicate a target time point, in which the target time point includes any one of the following:
a first time point at which a serving cell ends a service; or,
a second time point used to trigger the terminal to perform a target operation.

Optionally, the method further includes:
configuring association time information for the terminal; in which the association time information is used to indicate a time offset value corresponding to the target time point; and
sending the association time information to the terminal.

Optionally, the time information is used to indicate a target duration, and the target duration includes any one of the following:
a first duration in which a serving cell provides a service; or,
a second duration used to trigger the terminal to perform a target operation.

Optionally, the location information includes:
a reference location of a serving cell, and a first distance threshold between the terminal and the reference location of the serving cell; and/or,
a reference location of a neighboring cell, and a second distance threshold between the terminal and the reference location of the neighboring cell.

Optionally, the method further includes:
configuring a first distance hysteresis value corresponding to the serving cell and/or a second distance hysteresis value corresponding to the neighboring cell for the terminal; and
sending the first distance hysteresis value and/or the second distance hysteresis value to the terminal.

Optionally, the method further includes:
configuring second time period information corresponding to the location information for the terminal; and
sending the second time period information to the terminal.

According to a third aspect of embodiments of the disclosure, an apparatus for triggering an operation is provided, which is applied to a terminal. The apparatus includes:
a receiving module, configured to receive target information sent by a network device; in which the target information is used by the terminal to determine a trigger condition for triggering an RRC re-establishment operation and/or a neighboring cell measurement operation; and
a performing module, configured to perform the RRC re-establishment operation and/or the neighboring cell measurement operation in response to the trigger condition being satisfied.

According to a fourth aspect of embodiments of the disclosure, an apparatus for triggering an operation is provided, which is applied to a network device. The apparatus includes:
a first configuring module, configured to configure target information for a terminal; in which the target information is used by the terminal to determine a trigger condition for triggering an RRC re-establishment operation and/or a neighboring cell measurement operation; and
a first sending module, configured to send the target information to the terminal.

According to a fifth aspect of embodiments of the disclosure, a computer-readable storage medium is provided. The storage media stores a computer program, in which the computer program is used to implement the method for triggering an operation according to any embodiment of the first aspect.

According to a sixth aspect of embodiments of the disclosure, a computer-readable storage medium is provided. The storage media stores a computer program, in which the computer program is used to implement the method for triggering an operation according to any embodiment of the second aspect.

According to a seventh aspect of embodiments of the disclosure, a device for triggering an operation is provided. The device includes:
a processor;
a memory configured to store instructions executable by the processor;
in which, the processor is configured to execute the instructions to implement the method for triggering an operation according to any embodiment of the first aspect.

According to an eighth aspect of embodiments of the disclosure, a device for triggering an operation is provided. The device includes:
a processor;
a memory configured to store instructions executable by the processor;
in which, the processor is configured to execute the instructions to implement the method for triggering an operation according to any embodiment of the second aspect.

The technical solution according to embodiments of the present disclosure may include the following beneficial effects.

In embodiments of the disclosure, the terminal in a Non-Terrestrial Network (NTN) may determine the trigger condition for triggering the RRC re-establishment operation and/or the neighbor cell measurement operation based on the target information sent by the network device. Further, when the trigger condition is satisfied, the terminal performs the RRC re-establishment operation and/or the neighbor cell measurement operation. In the disclosure, a new trigger condition for triggering the terminal to perform the RRC re-establishment operation and/or the neighboring cell measurement operation is provided, so that a probability of terminal service interruption is reduced, continuity of a terminal service of the NTN is improved, with high availability.

It should be understood that the above general descriptions and following detailed descriptions are only illustrative and descriptive, and may not be a limitation of the present disclosure.

### BRIEF DESCRIPTION OF THE DRAWINGS

The drawings, which are incorporated into the specification and constitute a part of the specification, illustrate embodiments in conformity with the disclosure, and serve to explain the principle of the disclosure together with the specification.
FIG 1A and FIG 1B are flowcharts illustrating a radio resource control (RRC) re-establishment method according to an embodiment.
FIG 2 is a flowchart illustrating a method for triggering an operation according to an embodiment.
FIG 3A and FIG 3B are flowcharts illustrating a method for triggering an operation according to an embodiment.
FIG 4 is a flowchart illustrating a method for triggering an operation according to an embodiment.
FIG 5 is a flowchart illustrating a method for triggering an operation according to an embodiment.
FIG 6 is a flowchart illustrating a method for triggering an operation according to an embodiment.
FIG 7 is a flowchart illustrating a method for triggering an operation according to an embodiment.
FIG 8 is a flowchart illustrating a method for triggering an operation according to an embodiment.
FIG 9 is a flowchart illustrating a method for triggering an operation according to an embodiment.
FIG 10 is a flowchart illustrating a method for triggering an operation according to an embodiment.
FIG 11 is a flowchart illustrating a method for triggering an operation according to an embodiment.
FIG 12 is a flowchart illustrating a method for triggering an operation according to an embodiment.
FIG 13 is a flowchart illustrating a method for triggering an operation according to an embodiment.
FIG 14 is a flowchart illustrating a method for triggering an operation according to an embodiment.
FIG 15 is a flowchart illustrating a method for triggering an operation according to an embodiment.
FIG 16 is a flowchart illustrating a method for triggering an operation according to an embodiment.
FIG 17 is a flowchart illustrating a method for triggering an operation according to an embodiment.
FIG 18 is a flowchart illustrating a method for triggering an operation according to an embodiment.
FIG 19 is a block diagram illustrating an apparatus for triggering an operation according to an embodiment.
FIG 20 is a block diagram illustrating an apparatus for triggering an operation according to an embodiment.
FIG 21 is a block diagram illustrating a device for triggering an operation according to an embodiment of the disclosure.
FIG 22 is a block diagram illustrating another device for triggering an operation according to an embodiment of the disclosure.

### DETAILED DESCRIPTION

The example embodiments will be described in detail here, and examples thereof are shown in the accompanying drawings. When the following descriptions are referred to the accompanying drawings, unless otherwise indicated, the same numbers in different drawings represent the same or similar elements. The implementations described in the following example embodiments do not represent all implementations consistent with the present disclosure. Rather, they are merely examples of the apparatuses and methods consistent with some aspects of the present disclosure as detailed in the appended claims.

The terms used in the present disclosure are only for the purpose of describing specific embodiments and are not intended to limit the present disclosure. The singular forms "a", "the" and "said" used in the disclosure and the appended claims are also intended to include plural forms, unless the context clearly indicates otherwise. It should also be understood that the term "and/or" used in the disclosure means and includes any or all possible combinations of at least one associated listed item.

It should be understood that, although the terms first, second, third, etc. may be used in this disclosure to describe various information, such information shall not be limited to these terms. These terms are only used to distinguish the same type of information. For example, without departing from the scope of this present disclosure, the first information may also be referred to as the second information, and similarly, and the second information may also be referred to as the first information. Depending on the context, for example, a word "if' as used herein may be interpreted as "while" or "when" or "in response to determining".

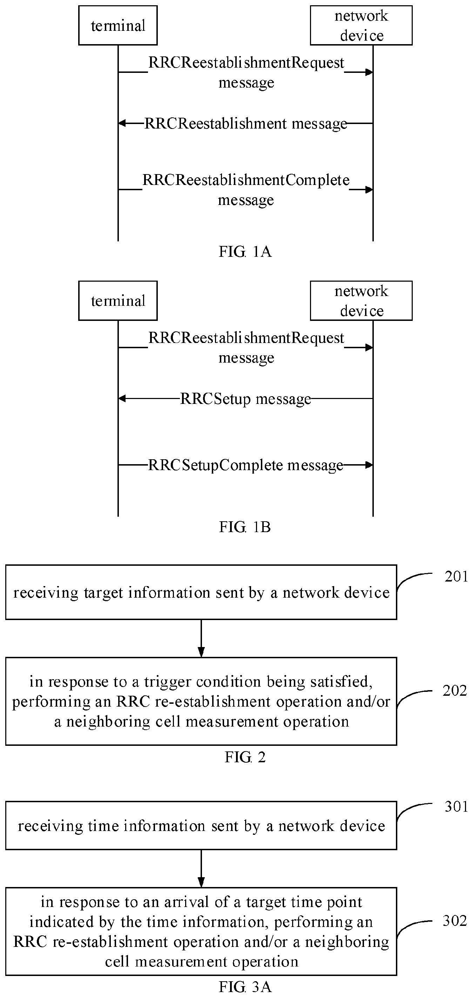

A radio resource control (RRC) re-establishment process may refer to FIG 1A or FIG 1B. In the RRC re-establishment process, a terminal may initiate an RRCReestablishmentRequest (an RRC re-establishment request) message to a network device, the network device may return an RRCReestablishment (an RRC re-establishment) message or an RRCSetup (an RRC setup) message to the terminal, and the terminal sends an RRCReestablishmentComplete (an RRC re-establishment complete) message or an RRCSetupComplete (an RRC setup complete) message to the network device based on the received message, so as to complete the RRC re-establishment.

A purpose of the RCC re-establishment is to re-establish an RRC connection between the terminal and a target cell. In the related art, a condition for triggering the terminal to perform the RRC re-establishment may include any one of the following:
upon detecting a Radio Link Failure (RLF) and T316 being not configured;
upon detecting an RLF of a Master Cell Group (MCG) while a Secondary Cell Group (SCG) transmission is suspended;
upon detecting an RLF of the MCG while a new radio (NR) Primary Secondary Cell (PSCell) changes or a PSCell addition is ongoing;
upon a handover failure;
upon a mobility failure of from Evolved Universal Terrestrial Radio Access (E-UTRA);
performing an integrity check according to a failure indication from a bottom layer concerning Signaling Radio Bearer 1 (SRB1) or SRB2, except when resuming an RRC connection after an early security reactivation in accordance with a protocol agreement,;
upon an RRC connection reconfiguration failure determined according to a protocol agreement;
upon detecting an RLF for a SCG while a MCG transmission is suspended;
upon a SCG change failure while a MCG transmission is suspended;
upon a SCG configuration failure while a MCG transmission is suspended;
upon an integrity check failure indication from a SCG lower layer concerning SRB3 while a MCG transmission is suspended; or
upon a T316 expiry.

Above RRC re-establishment conditions include, but are not limited to, triggering conditions such as detecting an RLF according to a protocol agreement by the terminal, or a handover failure.

Considering that the trigger conditions for triggering the terminal to perform an RRC re-establishment operation in the related art cannot meet a requirement of a terminal service in a Non-Terrestrial Network (NTN), the disclosure provides following methods for triggering an operation.

The following first describes a method for triggering an operation provided in the disclosure from a terminal side.

Embodiment of the disclosure provide a method for triggering an operation, as shown in FIG 2. FIG 2 is a flowchart illustrating a method for triggering an operation according to an embodiment, and the method may be performed by a terminal. In the disclosure, the terminal may be a terminal in a NTN, and the method may include the following steps.

At step 201, target information sent by a network device is received.

In embodiments of the disclosure, the network device may be a base station or a satellite in a NTN, which is not limited in the disclosure. The target information is used by the terminal to determine a trigger condition. The trigger condition is a condition for triggering the terminal to perform an RRC re-establishment operation and/or a neighboring cell measurement operation.

In a possible implementation, the terminal may receive a system message including the target information sent by the network device.

In another possible implementation, the terminal may receive an RRC message including the target information sent by the network device.

The foregoing descriptions are merely illustrative, and solutions in which the network device sends the target information to the terminal in other manners shall all fall within the protection scope of the disclosure.

At step 202, in response to the trigger condition being satisfied, an RRC re-establishment operation and/or a neighboring cell measurement operation is performed.

In embodiments of the disclosure, when the trigger condition is satisfied, the terminal performs the RRC re-establishment operation and/or the neighboring cell measurement operation.

It should be noted that the RRC re-establishment operation may be performed based on a result of the neighboring cell measurement operation. However, the neighboring cell measurement operation does not necessarily trigger the terminal to perform the RRC re-establishment operation.

In the foregoing embodiments, a new trigger condition for triggering the terminal to perform the RRC re-establishment operation and/or the neighboring cell measurement operation is provided, so that a probability of terminal service interruption is reduced, continuity of a terminal service of the NTN is improved, with high availability.

In some optional embodiments, the target information may include time information. That is, in embodiments of the disclosure, new time information may be introduced, so that the terminal determines the trigger condition based on the new time information, and performs the RRC re-establishment operation and/or the neighboring cell measurement operation when the trigger condition is satisfied.

In embodiments of the disclosure, the time information may indicate a specific target time point.

In a possible implementation, the target time point may include a first time point at which a serving cell ends a service. In embodiments of the disclosure, the time information may reuse an existing time parameter in the related art, and give the existing time parameter with a new meaning. A parameter t-service used to indicate the first time point at which the serving cell ends a service during a cell re-selection process may be reused as the time information for determining the trigger condition.

In another possible implementation, the target time point may include a second time point used to trigger the terminal to perform the RRC re-establishment operation and/or the neighboring cell measurement operation. In embodiments of the disclosure, a new parameter T may be defined as the time information for determining the trigger condition. The parameter T is used to indicate the second time point used to trigger the terminal to perform the RRC re-establishment operation and/or the neighboring cell measurement operation.

In the related art, the trigger condition for triggering the terminal to perform the RRC re-establishment based on the time information is the T316 expiry. The new time information is provided in the disclosure, the terminal may determine, based on the new time information, the trigger condition for triggering to perform the RRC re-establishment operation and/or the neighboring cell measurement operation, so that the terminal performs the RRC re-establishment operation and/or the neighboring cell measurement operation when the trigger condition is satisfied.

In the foregoing embodiments, the trigger condition for triggering the terminal to perform the RRC re-establishment operation and/or the neighboring cell measurement operation may be determined based on the new time information, so that in the case that the new trigger condition is satisfied, the terminal performs the RRC re-establishment operation and/or the neighboring cell measurement operation, which reduces the probability of terminal service interruption, and improves the continuity of the terminal service of the NTN, with the high availability.

In some optional embodiments, referring to FIG 3A, FIG 3A is a flowchart illustrating a method for triggering an operation according to an embodiment, the method may be performed by a terminal, and the method may include the following steps.

At step 301, time information sent by a network device is received.

The time information is used by the terminal to determine a trigger condition for triggering an RRC re-establishment operation and/or a neighboring cell measurement operation. The time information is used to indicate a target time point.

In a possible implementation, the target time point includes a first time point at which a serving cell ends a service.

In another possible implementation, the target time point includes a second time point used to trigger the terminal to perform the RRC re-establishment operation and/or the neighboring cell measurement operation.

In embodiments of the disclosure, the terminal may receive a system message or an RRC message including the time information sent by the network device. In addition, the terminal may determine that the trigger condition is an arrival of the target time point indicated by the time information.

At step 302, in response to the arrival of the target time point indicated by the time information, the RRC re-establishment operation and/or the neighboring cell measurement operation is performed.

In embodiments of the disclosure, when the first time point or the second time point arrives, the terminal determines that the trigger condition is satisfied, and automatically performs the RRC re-establishment operation and/or the neighboring cell measurement operation.

In the foregoing embodiment, when the target time point indicated by the time information delivered by the network device arrives, it is determined that the trigger condition is satisfied, and the terminal may perform the RRC re-establishment operation and/or the neighboring cell measurement operation. The probability of terminal service interruption is reduced, and the continuity of a terminal service of the NTN is improved, with high availability.

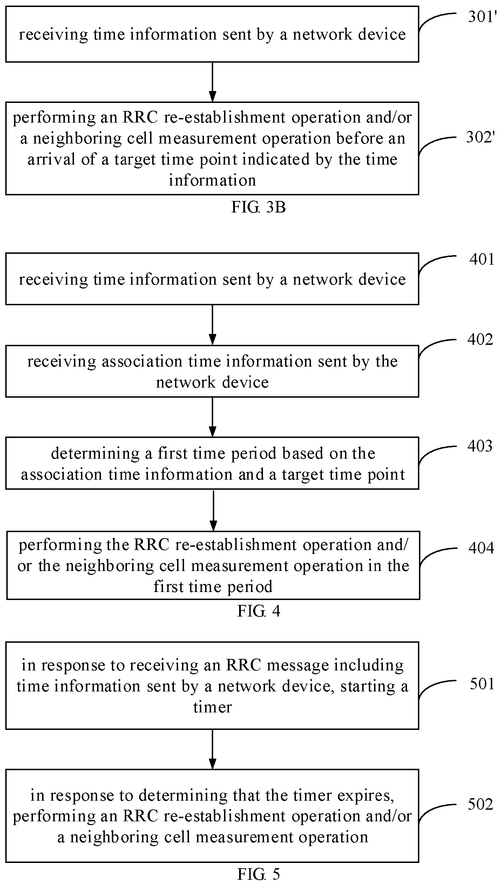

In some optional embodiments, referring to FIG 3B, FIG 3B is a flowchart illustrating a method for triggering an operation according to an embodiment. The method may be performed by a terminal, and includes the following steps.

At step 301', time information sent by a network device is received.

The time information is used by the terminal to determine a trigger condition for triggering an RRC re-establishment operation and/or a neighboring cell measurement operation. The time information is used to indicate a target time point.

In a possible implementation, the target time point includes a first time point at which a serving cell ends a service.

In another possible implementation, the target time point includes a second time point used to trigger the terminal to perform the RRC re-establishment operation and/or the neighboring cell measurement operation.

In embodiments of the disclosure, the terminal may receive a system message or an RRC message including the time information sent by the network device. In addition, the terminal may determine that the trigger condition is before an arrival of the target time point indicated by the time information, that is, before the first time point or the second time point.

At step 302', the RRC re-establishment operation and/or the neighboring cell measurement operation is performed before the arrival of the target time point indicated by the time information.

In embodiments of the disclosure, the terminal performs the RRC re-establishment operation and/or the neighboring cell measurement operation before the first time point or the second time point arrives.

In the foregoing embodiments, before the target time point indicated by the time information delivered by the network device arrives, the terminal may determines that the trigger condition is satisfied, and the terminal performs the RRC re-establishment operation and/or the neighboring cell measurement operation. The probability of terminal service interruption is reduced, and the continuity of a terminal service of the NTN is improved, with high availability.

In some optional embodiments, on the basis that the network device configures the time information for the terminal, the network device may further configure association time information for the terminal. The association time information is used to indicate a time offset value corresponding to the target time point.

In a possible implementation, the network device may send the association time information to the terminal through a system message. That is, the network device sends a system message including the association time information to the terminal.

In another possible implementation, the network device may send the association time information to the terminal through an RRC message. That is, the network device sends an RRC message including the association time information to the terminal.

In some optional embodiments, referring to FIG 4, FIG 4 is a flowchart illustrating a method for triggering an operation according to an embodiment. The method may be performed by a terminal, and includes the following steps.

At step 401, time information sent by a network device is received.

The time information is used by the terminal to determine a trigger condition for triggering an RRC re-establishment operation and/or a neighboring cell measurement operation. The time information is used to indicate a target time point.

In a possible implementation, the target time point includes a first time point at which a serving cell ends a service.

In another possible implementation, the target time point includes a second time point used to trigger the terminal to perform the RRC re-establishment operation and/or the neighboring cell measurement operation.

In embodiments of the disclosure, the terminal may receive a system message or an RRC message including the time information sent by the network device.

At step 402, association time information sent by the network device is received.

The association time information is used to indicate a time offset value corresponding to the target time point. In embodiments of the disclosure, the terminal may receive a system message or an RRC message including the association time information sent by the network device.

At step 403, a first time period is determined based on the association time information and the target time point.

In a possible implementation, the association time information is used to indicate a time offset value Toffset corresponding to the first time point. The terminal may determine a difference between the first time point and the time offset value as a start time point of the first time period, and determine the first time point as an end time point of the first time period.

For example, the target time point includes a first time point t-service, and the terminal determines a time period {t-service - Toffset, t-service} as the first time period.

In another possible implementation, the association time information is used to indicate a start time point T1 corresponding to the second time point. The terminal may determine a time period from the start time point indicated by the association time information to the second time point as the first time period.

For example, the target time point includes a second time point T, and the terminal determines a time period {T1, T} as the first time period.

At step 404, the RRC re-establishment operation and/or the neighboring cell measurement operation is performed in the first time period.

In embodiments of the disclosure, in a case that the terminal is in the first time period, the terminal may determine that the trigger condition is satisfied, and the terminal may perform the RRC re-establishment operation and/or the neighboring cell measurement operation.

In the foregoing embodiment, on the basis that the network device configures the time information for the terminal, the network device may further configure the association time information for the terminal. In the case of determining that the trigger condition is satisfied based on the association time information and the time information, the terminal performs the RRC re-establishment operation and/or the neighboring cell measurement operation. A purpose of providing a new trigger condition for triggering the terminal to perform the RRC re-establishment operation and/or the neighboring cell measurement operation is achieved, the probability of terminal service interruption is reduced, and the continuity of a terminal service of the NTN is improved, with high availability.

In some optional embodiments, in a case that the above trigger condition for triggering the RRC re-establishment operation is satisfied and the terminal is not triggered to perform handover, the terminal performs the RRC re-establishment operation.

In a possible implementation, when the terminal does not receive an RRC re-configuration message used to perform the handover sent by the network device, it is determined that the terminal is not triggered to perform the handover. For example, in the case that the terminal does not receive an RRC ReconfigurationWithSync (RRC re-configuration) message including mobility control information sent by the network device, and/or that the terminal does not receive an RRC re-configuration message including information for accessing a target cell, it is determined that the terminal is not triggered to perform the handover.

In another possible implementation, in the case that Conditional HandOver (CHO) is not triggered, the terminal determines that the terminal is not triggered to perform the handover.

In the foregoing embodiments, for the RRC re-establishment operation, the terminal may automatically perform the RRC re-establishment operation in the case that the trigger condition for triggering the RRC re-establishment operation is satisfied and the terminal is not triggered to perform the handover, providing a new trigger condition for triggering the terminal to perform the RRC re-establishment operation, reducing the probability of terminal service interruption, and improving the continuity of the terminal service of the NTN, with high availability.

In some optional embodiments, in addition to indicating the target time point, the time information may be further used to indicate a relative time. That is, the time information may be used to indicate a target duration.

In a possible embodiment, the target duration may include a first duration in which the serving cell provides a service.

In another possible implementation, the target duration may include a second duration used to trigger the terminal to perform the RRC re-establishment operation and/or the neighboring cell measurement operation.

Referring to FIG 5, FIG 5 is a flowchart illustrating a method for triggering an operation according to an embodiment. The method may be performed by a terminal, and includes the following steps.

At step 501, in response to receiving an RRC message including time information sent by a network device, a timer is started.

In embodiments of the disclosure, the time information is used to indicate a target duration. The target duration includes a first duration in which a serving cell provides a service, or a second duration used to trigger the terminal to perform the RRC re-establishment operation and/or the neighboring cell measurement operation.

In embodiments of the disclosure, the timer is a new timer different from T316. A timing duration of the timer is equal to the target duration indicated by the time information.

It should be noted that, when different terminals receive RRC messages including the time information at different time points, the timing durations of the timers are also different.

At step 502, in response to determining that the timer expires, the RRC re-establishment operation and/or the neighboring cell measurement operation is performed.

In embodiments of the disclosure, in the case of determining that the timer expires, the terminal determines that a trigger condition is satisfied, and the terminal performs the RRC re-establishment operation and/or the neighboring cell measurement operation.

In the foregoing embodiment, a new trigger condition for triggering the terminal to perform the RRC re-establishment operation and/or the neighboring cell measurement operation is provided, so that the probability of terminal service interruption is reduced, and the continuity of a terminal service of NTN is improved, with high availability.

Similarly, in the case that the above trigger condition for triggering the RRC re-establishment operation is satisfied and the terminal is not triggered to perform handover, the terminal performs the RRC re-establishment operation.

In some optional embodiments, the target information may include location information. That is, new location information may be introduced, so that the terminal determines the trigger condition based on the new location information, and performs the RRC re-establishment operation and/or the neighboring cell measurement operation when the trigger condition is satisfied. Similarly, the network device may send a system message or an RRC message including the location information to the terminal, so that the terminal receives the location information.

In a possible implementation, the location information may reuse a location parameter for performing cell reselection, or the location information may be a newly defined location parameter in a protocol, which is not limited in the disclosure.

In a possible implementation, the location information may include a reference location of a serving cell, and a first distance threshold between the terminal and the reference location of the serving cell. The reference location of the serving cell includes but is not limited to a location of a serving satellite, a central location of a terrestrial serving cell, and the like.

In another possible implementation, the location information may include a reference location of a neighboring cell, and a second distance threshold between the terminal and the reference location of the neighboring cell. The reference location of the neighboring cell includes but is not limited to a location of a neighboring satellite, a central location of a terrestrial neighboring cell, and the like.

In another possible implementation, the location information may include the reference location of the serving cell, the first distance threshold between the terminal and the reference location of the serving cell, the reference location of the neighboring cell, and the second distance threshold between the terminal and the reference location of the neighboring cell.

The first distance threshold and the second distance threshold may be the same or different, which is not limited in the disclosure.

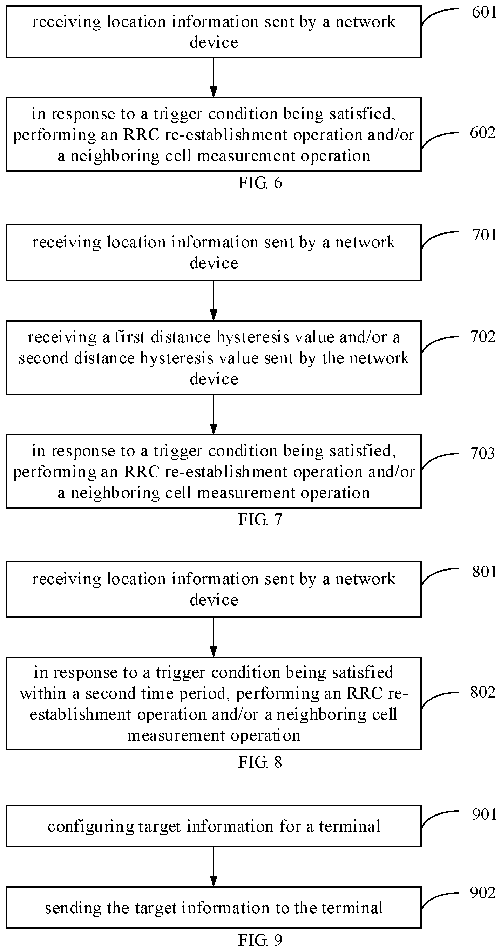

In some optional embodiments, referring to FIG 6, FIG 6 is a flowchart illustrating a method for triggering an operation according to an embodiment. The method may be performed by a terminal, and may include the following steps.

At step 601, location information sent by a network device is received.

In a possible implementation, the location information may include a reference location of a serving cell, and a first distance threshold between the terminal and the reference location of the serving cell.

In another possible implementation, the location information may include a reference location of a neighboring cell, and a second distance threshold between the terminal and the reference location of the neighboring cell.

In another possible implementation, the location information may include the reference location of the serving cell, the first distance threshold between the terminal and the reference location of the serving cell, the reference location of the neighboring cell, and the second distance threshold between the terminal and the reference location of the neighboring cell.

The first distance threshold and the second distance threshold may be the same or different, which is not limited in the disclosure.

At step 602, in response to a trigger condition being satisfied, an RRC re-establishment operation and/or a neighboring cell measurement operation is performed.

In a possible implementation, the terminal may determine a first distance value between the terminal and the reference location of the serving cell. In the case that the first distance value is greater than or equal to the first distance threshold, it is determined that the trigger condition is satisfied, and the RRC re-establishment operation and/or the neighboring cell measurement operation is performed.

In another possible implementation, the terminal may determine a second distance value between the terminal and the reference location of the neighboring cell. In the case that the second distance value is less than or equal to the second distance threshold, it is determined that the trigger condition is satisfied, and the RRC re-establishment operation and/or the neighboring cell measurement operation is performed.

In another possible implementation, in the case that the first distance value is greater than or equal to the first distance threshold, and the second distance value is less than or equal to the second distance threshold, it is determined that the trigger condition is satisfied, and the RRC re-establishment operation and/or the neighboring cell measurement operation is performed.

In the foregoing embodiment, the terminal may determine, based on the location information sent by the network device, whether the trigger condition is satisfied. In the case that the trigger condition is satisfied, the RRC re-establishment operation and/or the neighboring cell measurement operation is performed. Similarly, the purpose of providing a new trigger condition for triggering the terminal to perform the RRC re-establishment operation and/or the neighboring cell measurement operation is achieved, probability of terminal service interruption is reduced, and the continuity of a terminal service of NTN is improved, with high availability.

In some optional embodiments, considering a mobility of the terminal, the network device may further configure and provide a first distance hysteresis value corresponding to the serving cell and/or a second distance hysteresis value corresponding to the neighboring cell for the terminal.

The network device may send a system message including the first distance hysteresis value and/or the second distance hysteresis value to the terminal, or the network device may send an RRC message including the first distance hysteresis value and/or the second distance hysteresis value to the terminal, so that the terminal obtains the first distance hysteresis value and/or the second distance hysteresis value.

In some optional embodiments, referring to FIG 7, FIG 7 is a flowchart illustrating a method for triggering an operation according to an embodiment. The method may be performed by a terminal, and may include the following steps.

At step 701, location information sent by a network device is received.

In a possible implementation, the location information may include a reference location of a serving cell, and a first distance threshold between the terminal and the reference location of the serving cell.

In another possible implementation, the location information may include a reference location of a neighboring cell, and a second distance threshold between the terminal and the reference location of the neighboring cell.

In another possible implementation, the location information may include the reference location of the serving cell, the first distance threshold between the terminal and the reference location of the serving cell, the reference location of the neighboring cell, and the second distance threshold between the terminal and the reference location of the neighboring cell.

The first distance threshold and the second distance threshold may be the same or different, which is not limited in the disclosure.

In embodiments of the disclosure, the terminal may receive a system message or an RRC message including the location information sent by the network device.

At step 702, a first distance hysteresis value and/or a second distance hysteresis value sent by the network device is received.

In a possible implementation, the terminal may receive a system message including the first distance hysteresis value and/or the second distance hysteresis value sent by the network device.

In another possible implementation, the terminal may receive an RRC message including the first distance hysteresis value and/or the second distance hysteresis value sent by the network device.

At step 703, in response to a trigger condition being satisfied, an RRC re-establishment operation and/or a neighboring cell measurement operation is performed.

In a possible implementation, the terminal may first determine a first distance value between the terminal and the reference location of the serving cell, and then determine a first sum value of the first distance value and the first distance hysteresis value. In the case that the first sum value is greater than or equal to the first distance threshold value, it is determined that the trigger condition is satisfied.

In another possible implementation, the terminal may first determine a second distance value between the terminal and the reference location of the neighboring cell, and then determine a second sum value of the second distance value and the second distance hysteresis value. In the case that the second sum value is less than or equal to the second distance threshold, it is determined that the trigger condition is satisfied.

In another possible implementation, in the case that the first sum value is greater than or equal to the first distance threshold value, and the second sum value is less than or equal to the second distance threshold value, it is determined that the trigger condition is satisfied.

In the foregoing embodiment, the terminal may determine, based on the location information and the location hysteresis value sent by the network device, whether the trigger condition is satisfied. In the case that the trigger condition is satisfied, the terminal performs the RRC re-establishment operation and/or the neighboring cell measurement operation. Similarly, the purpose of providing a new trigger condition for triggering the terminal to perform the RRC re-establishment operation and/or the neighboring cell measurement operation is achieved, the probability of terminal service interruption is reduced, and the continuity of a terminal service of NTN is improved, with high availability.

It should be further noted that, in the case that the above trigger condition for triggering the RRC re-establishment operation is satisfied and the terminal is not triggered to perform handover, the terminal performs the RRC re-establishment operation.

In a possible implementation, when the terminal does not receive an RRC re-configuration message used to perform the handover sent by the network device, it is determined that the terminal is not triggered to perform the handover. For example, in the case that the terminal does not receive an RRC ReconfigurationWithSync (RRC re-configuration) message including mobility control information sent by the network device, and/or the terminal does not receive an RRC re-configuration message including information for accessing a target cell, it is determined that the terminal is not triggered to perform the handover.

In another possible implementation, in the case that Conditional HandOver (CHO) is not triggered, it is determined that the terminal is not triggered to perform the handover.

In some optional embodiments, referring to FIG 8, FIG 8 is a flowchart illustrating a method for triggering an operation according to an embodiment. The method may be performed by a terminal, and may include the following steps.

At step 801, location information sent by a network device is received.

In a possible implementation, the location information may include a reference location of a serving cell, and a first distance threshold between the terminal and the reference location of the serving cell.

In another possible implementation, the location information may include a reference location of a neighboring cell, and a second distance threshold between the terminal and the reference location of the neighboring cell.

In another possible implementation, the location information may include the reference location of the serving cell, the first distance threshold between the terminal and the reference location of the serving cell, the reference location of the neighboring cell, and the second distance threshold between the terminal and the reference location of the neighboring cell.

The first distance threshold and the second distance threshold may be the same or different, which is not limited in the disclosure.

In embodiments of the disclosure, the terminal may receive a system message or an RRC message including the location information sent by the network device.

At step 802, in response to the trigger condition being satisfied within a second time period, an RRC re-establishment operation and/or a neighboring cell measurement operation is performed.

In embodiments of the disclosure, considering a mobility of the terminal, in order to avoid misjudgment and prevent the terminal from frequently performing the RRC re-establishment operation and/or neighboring cell measurement operation, in the case of determining that the trigger condition is satisfied within the second time period, the terminal may perform the RRC re-establishment operation and/or the neighboring cell measurement operation.

In embodiments of the disclosure, the second time period information may be configured by the network device,

In a possible implementation, the terminal may receive a system message including the second time period information sent by the network device.

In another possible implementation, the terminal may receive an RRC message including the second time period information sent by the network device.

For example, the network device configures the second time period information for the terminal. If the trigger condition is satisfied within a second time period which is Time To Trigger (TTT), the terminal may perform the RRC re-establishment operation and/or the neighboring cell measurement operation.

In the foregoing embodiments, in a case that the terminal determines that the trigger condition is satisfied within the second time period, the terminal performs the RRC re-establishment operation and/or the neighboring cell measurement operation, so as to prevent the terminal from frequently performing the RRC re-establishment operation and/or the neighboring cell measurement operation, reducing energy consumption of the terminal, and achieving high availability.

It should be further noted that, in the case that the above trigger condition for triggering the RRC re-establishment operation is satisfied and the terminal is not triggered to perform handover, the terminal performs the RRC re-establishment operation.

The following describes a method for triggering an operation provided in the disclosure from a network device.

Embodiment of the disclosure provide a method for triggering an operation, which as shown in FIG 9. FIG 9 is a flowchart illustrating the method for triggering an operation according to an embodiment, and the method may be performed by a network device. In the disclosure, the network device may be a base station or a satellite in a NTN, and the method may include the following steps.

At step 901, target information is configured for a terminal.

In embodiments of the disclosure, the target information is used by the terminal to determine a trigger condition for triggering an RRC re-establishment operation and/or a neighboring cell measurement operation.

At step 902, the target information is sent to the terminal.

In a possible implementation, the network device may send a system message including the target information to the terminal.

In another possible implementation, the network device may send an RRC message including the target information to the terminal.

In the foregoing embodiments, the network device may configure target information for determining the trigger condition for the terminal, and send the target information to the terminal, so that the terminal determines the trigger condition based on the target information, and in a case that the trigger condition is satisfied, the terminal performs the RRC re-establishment operation and/or the neighboring cell measurement operation. The purpose of providing a new trigger condition for triggering the terminal to perform the RRC re-establishment operation and/or the neighboring cell measurement operation is achieved, a probability of terminal service interruption is reduced, and the continuity of a terminal service of NTN is improved, with high availability.

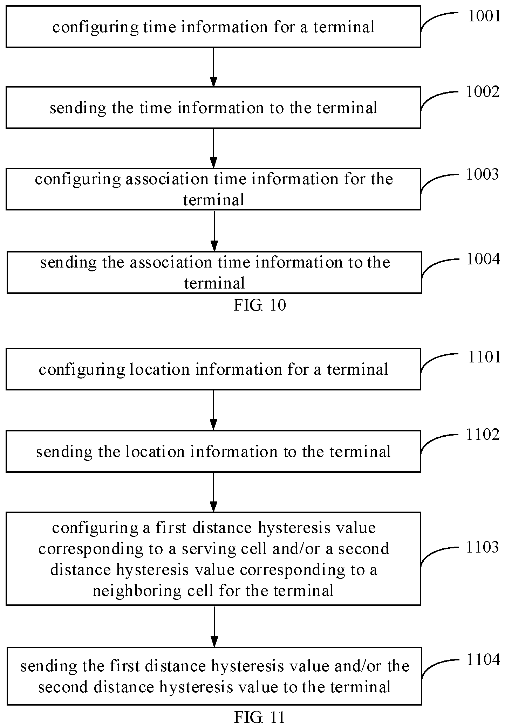

In some optional embodiments, referring to FIG 10, FIG 10 is a flowchart illustrating a method for triggering an operation according to an embodiment. The method may be performed by a network device, and may include the following steps.

At step 1001, time information is configured for a terminal.

The time information is used to indicate a target time point, and the target time point includes a first time point at which a serving cell ends a service, or a second time point used to trigger the terminal to perform a target operation.

At step 1002, the time information is sent to the terminal.

In a possible implementation, the network device may send a system message including the time information to the terminal.

In another possible implementation, the network device may send an RRC message including the time information to the terminal.

At block 1003, association time information is configured for the terminal.

In embodiments of the disclosure, the association time information is used to indicate a time offset value corresponding to the first time point or the second time point.

In a possible implementation, the association time information is used to indicate a time offset value corresponding to the first time point.

In another possible implementation, the association time information is used to indicate a start time point corresponding to the second time point.

At step 1004, the association time information is sent to the terminal.

In a possible implementation, the network device may send a system message including the association time information to the terminal.

In another possible implementation, the network device may send an RRC message including the association time information to the terminal.

An execution order of the steps is not limited in the disclosure. In addition, the network device may send the time information and the association time information to the terminal through the same or different system messages, or send the time information and the association time information to the terminal through the same or different RRC messages, which is not limited in the disclosure.

In the foregoing embodiments, the network device may configure the time information and the association time information for the terminal, so that the terminal determines the trigger condition based on both the time information and the association time information jointly, and in a case that the trigger condition is satisfied, the terminal performs the RRC re-establishment operation and/or the neighboring cell measurement operation. The purpose of providing a new trigger condition for triggering the terminal to perform the RRC re-establishment operation and/or the neighboring cell measurement operation is achieved, the probability of terminal service interruption is reduced, and the continuity of a terminal service of NTN is improved, with high availability.

In some optional embodiments, the time information may be used to indicate a relative time, that is, used to indicate a target duration. The target duration includes a first duration in which the serving cell provides a service, or a second duration used to trigger the terminal to perform the target operation.

The network device may send an RRC message including the time information to the terminal, and the terminal receives the RRC message, and starts a timer. A timing duration of the timer is equal to the target duration. When the timer expires, the terminal determines that the trigger condition is satisfied, and performs the RRC re-establishment operation and/or the neighboring cell measurement operation.

In the foregoing embodiment, the purpose of providing a new trigger condition for triggering the terminal to perform the RRC re-establishment operation and/or the neighboring cell measurement operation is achieved, the probability of terminal service interruption is reduced, and the continuity of a terminal service of NTN is improved, with high availability.

In some optional embodiments, the target information may also include location information.

In a possible implementation, the location information may reuse a location parameter for performing cell reselection, or the location information may be a newly defined location parameter in a protocol, which is not limited in the disclosure.

In a possible implementation, the location information may include a reference location of the serving cell, and a first distance threshold between the terminal and the reference location of the serving cell. The reference location of the serving cell includes but is not limited to a location of a serving satellite, a central location of a terrestrial serving cell, and the like.

In another possible implementation, the location information may include a reference location of a neighboring cell, and a second distance threshold between the terminal and the reference location of the neighboring cell. The reference location of the neighboring cell includes but is not limited to a location of a neighboring satellite, a central location of a terrestrial neighboring cell, and the like.

In another possible implementation, the location information may include the reference location of the serving cell, the first distance threshold between the terminal and the reference location of the serving cell, the reference location of the neighboring cell, and the second distance threshold between the terminal and the reference location of the neighboring cell.

The first distance threshold and the second distance threshold may be the same or different, which is not limited in the disclosure.

In some optional embodiments, referring to FIG 11, FIG 11 is a flowchart illustrating a method for triggering an operation according to an embodiment. The method may be performed by a network device, and may include the following steps.

At step 1101, location information is configured for a terminal.

In a possible implementation, the location information may reuse a location parameter in the related art, or the location information may be a newly defined location parameter in a protocol, which is not limited in the disclosure.

In a possible implementation, the location information may include a reference location of a serving cell, and a first distance threshold between the terminal and the reference location of the serving cell. The reference location of the serving cell includes but is not limited to a location of a serving satellite, a central location of a terrestrial serving cell, and the like.

In another possible implementation, the location information may include a reference location of a neighboring cell, and a second distance threshold between the terminal and the reference location of the neighboring cell. The reference location of the neighboring cell includes but is not limited to a location of a neighboring satellite, a central location of a terrestrial neighboring cell, and the like.

In another possible implementation, the location information may include the reference location of the serving cell, the first distance threshold between the terminal and the reference location of the serving cell, the reference location of the neighboring cell, and the second distance threshold between the terminal and the reference location of the neighboring cell.

The first distance threshold and the second distance threshold may be the same or different, which is not limited in the disclosure.

At step 1102, the location information is sent to the terminal.

In embodiments of the disclosure, the network device may send a system message or an RRC message including the location information to the terminal.

At step 1103, a first distance hysteresis value corresponding to the serving cell and/or a second distance hysteresis value corresponding to the neighboring cell is configured for the terminal.

At step 1104, the first distance hysteresis value and/or the second distance hysteresis value is sent to the terminal.

In a possible implementation, the network device may send a system message including the first distance hysteresis value and/or the second distance hysteresis value to the terminal.

In another possible implementation, the network device may send an RRC message including the first distance hysteresis value and/or the second distance hysteresis value to the terminal.

An execution order of the steps is not limited in the disclosure. In addition, the network device may send the location information and a distance hysteresis value (the first distance hysteresis value and/or the second distance hysteresis value) to the terminal through the same or different system messages, or send the location information and the distance hysteresis value (the first distance hysteresis value and/or the second distance hysteresis value) to the terminal through the same or different RRC messages, which is not limited in the present disclosure.

In the foregoing embodiment, the network device may configure the location information and a corresponding location hysteresis value for the terminal, so that the terminal determines the trigger condition based on both the location information and the corresponding location hysteresis value, and performs the RRC re-establishment operation and/or the neighboring cell measurement operation in a case that the trigger condition is satisfied. The purpose of providing a new trigger condition for triggering the terminal to perform the RRC re-establishment operation and/or the neighboring cell measurement operation is achieved, the probability of terminal service interruption is reduced, and the continuity of a terminal service of NTN is improved, with high availability.

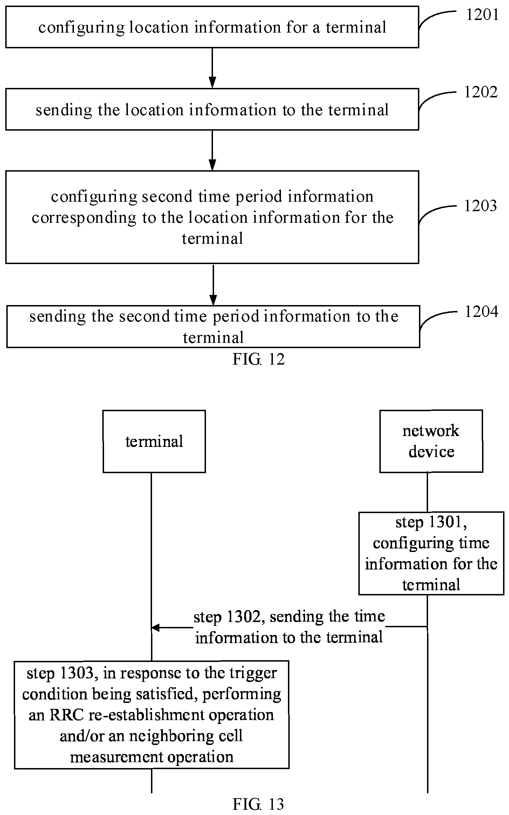

In some optional embodiments, referring to FIG 12, FIG 12 is a flowchart illustrating a method for triggering an operation according to an embodiment. The method may be performed by a network device, and may include the following steps.

At step 1201, location information is configured for a terminal.

In a possible implementation, the location information may reuse a location parameter in the related art, or the location information may be a newly defined location parameter in a protocol, which is not limited in the disclosure.

In a possible implementation, the location information may include a reference location of a serving cell, and a first distance threshold between the terminal and the reference location of the serving cell. The reference location of the serving cell includes but is not limited to a location of a serving satellite, a central location of a terrestrial serving cell, and the like.

In another possible implementation, the location information may include a reference location of a neighboring cell, and a second distance threshold between the terminal and the reference location of the neighboring cell. The reference location of the neighboring cell includes but is not limited to a location of a neighboring satellite, a central location of a terrestrial neighboring cell, and the like.

In another possible implementation, the location information may include the reference location of the serving cell, the first distance threshold between the terminal and the reference location of the serving cell, the reference location of the neighboring cell, and the second distance threshold between the terminal and the reference location of the neighboring cell.

The first distance threshold and the second distance threshold may be the same or different, which is not limited in the disclosure.

At step 1202, the location information is sent to the terminal.

In embodiments of the disclosure, the network device may send a system message or an RRC message including the location information to the terminal.

At step 1203, second time period information corresponding to the location information is configured for the terminal.

In embodiments of the disclosure, the network device may configure TTT for the terminal, so that in the case that the terminal determines that the trigger condition is always satisfied during the second time period, the terminal performs an RRC re-establishment operation and/or a neighboring cell measurement operation.

At step 1204, the second time period information is sent to the terminal.

In a possible implementation, the network device may send a system message including the second time period information to the terminal.

In another possible implementation, the network device may send an RRC message including the second time period information to the terminal.

In the foregoing embodiments, the network device may configure the location information and the second time period information for the terminal, so that in a case that the terminal determines that the trigger condition is satisfied within the second time period based on both the location information and the second time period information, the terminal performs the RRC re-establishment operation and/or the neighboring cell measurement operation. The purpose of providing a new trigger condition for triggering the terminal to perform the RRC re-establishment operation and/or the neighboring cell measurement operation is achieved, preventing the terminal from frequently perform the RRC re-establishment operation and/or the neighboring cell measurement operation, and reducing energy consumption of the terminal, with high availability.

In some optional embodiments, referring to FIG 13, FIG 13 is a flowchart illustrating a method for triggering an operation according to an embodiment. The method may include the following steps.

At step 1301, a network device configures time information for a terminal.

The time information is used by the terminal to determine a trigger condition for triggering an RRC re-establishment operation and/or a neighboring cell measurement operation.

The time information is used to indicate a target time point. The target time point includes any one of the following: a first time point at which a serving cell ends a service; or a second time point used to trigger the terminal to perform a target operation.

At step 1302, the network device sends the time information to the terminal.

In a possible implementation, the network device sends a system message including the time information to the terminal.

In another possible implementation, the network device sends an RRC message including the time information to the terminal.

At step 1303, in response to the trigger condition being satisfied, the terminal performs an RRC re-establishment operation and/or a neighboring cell measurement operation.

In embodiments of the disclosure, in a case that the target time point arrives, the terminal may determine that the trigger condition is satisfied, and perform the RRC re-establishment operation and/or the neighboring cell measurement operation.

Alternatively, before the target time point arrives, the terminal may determine that the trigger condition is satisfied, and perform the RRC re-establishment operation and/or the neighboring cell measurement operation.

In the case of determining that a trigger condition for triggering the RRC re-establishment operation is satisfied and the terminal is not triggered to perform handover, the terminal performs the RRC re-establishment operation.

In the foregoing embodiments, a new trigger condition for triggering the terminal to perform the RRC re-establishment operation and/or the neighboring cell measurement operation is provided, so that the probability of terminal service interruption is reduced, and the continuity of a terminal service of NTN is improved, with high availability.

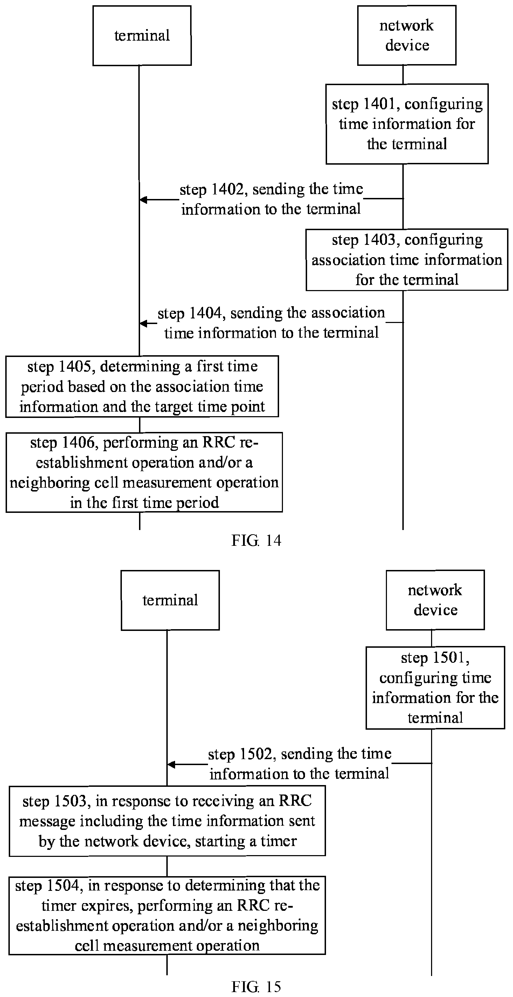

In some optional embodiments, referring to FIG 14, FIG 14 is a flowchart illustrating a method for triggering an operation according to an embodiment. The method may include the following steps.

At step 1401, a network device configures time information for a terminal.

The time information is used by the terminal to determine a trigger condition for triggering an RRC re-establishment operation and/or a neighboring cell measurement operation.

The time information is used to indicate a target time point. The target time point includes any one of the following: a first time point at which a serving cell ends a service; or a second time point at which the terminal is triggered to perform a target operation.

At step 1402, the network device sends the time information to the terminal.

In a possible implementation, the network device sends a system message including the time information to the terminal.

In another possible implementation, the network device sends an RRC message including the time information to the terminal.

At step 1403, the network device configures association time information for the terminal.

The association time information is used to indicate a time offset value corresponding to the target time point.

At step 1404, the network device sends the association time information to the terminal.

In a possible implementation, the network device sends a system message including the association time information to the terminal.

In another possible implementation, the network device sends an RRC message including the association time information to the terminal.

At step 1405, the terminal determines a first time period based on the association time information and the target time point.

A manner of determining the first time period is similar to the manner of determining the first time period in step 402, and details are not described herein again.

At step 1406, the terminal performs the RRC re-establishment operation and/or the neighboring cell measurement operation in the first time period.

In the case of determining that a trigger condition for triggering the RRC re-establishment operation is satisfied and the terminal is not triggered to perform handover, the terminal performs the RRC re-establishment operation.

In the foregoing embodiments, a new trigger condition for triggering the terminal to perform the RRC re-establishment operation and/or the neighboring cell measurement operation is provided, so that the probability of terminal service interruption is reduced, and the continuity of a terminal service of NTN is improved, with high availability.

In some optional embodiments, referring to FIG 15, FIG 15 is a flowchart illustrating a method for triggering an operation according to an embodiment. The method may include the following steps.

At step 1501, a network device configures time information for a terminal.

The time information is used by the terminal to determine a trigger condition for triggering an RRC re-establishment operation and/or a neighboring cell measurement operation.

In embodiments of the disclosure, the time information is used to indicate a target duration. The target duration includes any one of the following: a first duration in which a serving cell provides a service, or a second duration used to trigger the terminal to perform the RRC re-establishment operation and/or the neighboring cell measurement operation.

At step 1502, the network device sends the time information to the terminal.

In a possible implementation, the network device sends an RRC message including the time information to the terminal.

At step 1503, in response to receiving the RRC message including the time information sent by the network device, a timer is started.

In embodiments of the disclosure, a timing duration of the timer is equal to the target duration indicated by the time information.

At step 1504, in response to determining that the timer expires, the terminal performs the RRC re-establishment operation and/or the neighboring cell measurement operation.

In embodiments of the disclosure, in the case of determining that the timer expires, the terminal determines that the trigger condition is satisfied. At this time, the RRC re-establishment operation and/or the neighboring cell measurement operation may be performed.

In the case of determining that a trigger condition for triggering the RRC re-establishment operation is satisfied and the terminal is not triggered to perform handover, the terminal performs the RRC re-establishment operation.

In the foregoing embodiments, a new trigger condition for triggering the terminal to perform the RRC re-establishment operation and/or the neighboring cell measurement operation is provided, so that the probability of terminal service interruption is reduced, and the continuity of a terminal service of NTN is improved, with high availability.

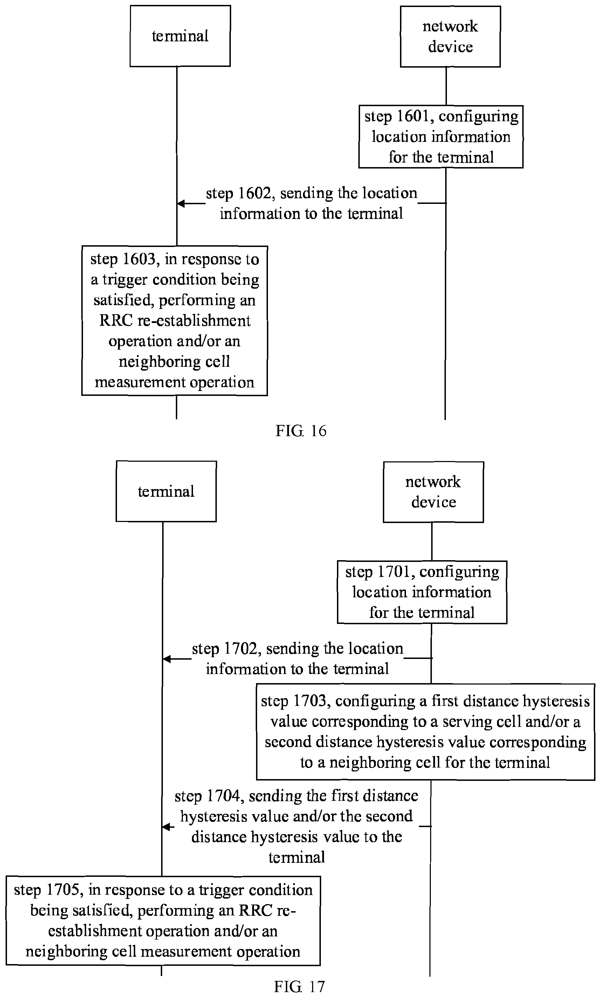

In some optional embodiments, referring to FIG 16, FIG 16 is a flowchart illustrating a method for triggering an operation according to an embodiment. The method may include the following steps.

At step 1601, a network device configures location information for a terminal.

In a possible implementation, the location information may reuse a location parameter in the related art, or the location information may be a newly defined location parameter in a protocol, which is not limited in the disclosure.

In a possible implementation, the location information may include a reference location of a serving cell, and a first distance threshold between the terminal and the reference location of the serving cell. The reference location of the serving cell includes but is not limited to a location of a serving satellite, a central location of a terrestrial serving cell, and the like.

In another possible implementation, the location information may include a reference location of a neighboring cell, and a second distance threshold between the terminal and the reference location of the neighboring cell. The reference location of the neighboring cell includes but is not limited to a location of a neighboring satellite, a central location of a terrestrial neighboring cell, and the like.

In another possible implementation, the location information may include the reference location of the serving cell, the first distance threshold between the terminal and the reference location of the serving cell, the reference location of the neighboring cell, and the second distance threshold between the terminal and the reference location of the neighboring cell.

The first distance threshold and the second distance threshold may be the same or different, which is not limited in the disclosure.

At step 1602, the network device sends the location information to the terminal.

In a possible implementation, the network device sends a system message including the location information to the terminal.

In another possible implementation, the network device sends an RRC message including the location information to the terminal.

At step 1603, in response to a trigger condition being satisfied, the terminal performs an RRC re-establishment operation and/or a neighboring cell measurement operation.

In a possible implementation, the terminal may determine a first distance value between the terminal and the reference location of the serving cell. In the case that the first distance value is greater than or equal to the first distance threshold, it is determined that the trigger condition is satisfied, and the RRC re-establishment operation and/or the neighboring cell measurement operation is performed.

In another possible implementation, the terminal may determine a second distance value between the terminal and the reference location of the neighboring cell. In the case that the second distance value is less than or equal to the second distance threshold, it is determined that the trigger condition is satisfied, and the RRC re-establishment operation and/or the neighboring cell measurement operation is performed.

In another possible implementation, in the case that the first distance value is greater than or equal to the first distance threshold, and the second distance value is less than or equal to the second distance threshold, it is determined that the trigger condition is satisfied, and the RRC re-establishment operation and/or the neighboring cell measurement operation is performed.

In the foregoing embodiments, a new trigger condition for triggering the terminal to perform the RRC re-establishment operation and/or the neighboring cell measurement operation is provided, so that the probability of terminal service interruption is reduced, and the continuity of a terminal service of NTN is improved, with high availability.

In some optional embodiments, referring to FIG 17, FIG 17 is a flowchart illustrating a method for triggering an operation according to an embodiment. The method may include the following steps.

At step 1701, a network device configures location information for a terminal.

In a possible implementation, the location information may reuse a location parameter in the related art, or the location information may be a newly defined location parameter in a protocol, which is not limited in the disclosure.

In a possible implementation, the location information may include a reference location of a serving cell, and a first distance threshold between the terminal and the reference location of the serving cell. The reference location of the serving cell includes but is not limited to a location of a serving satellite, a central location of a terrestrial serving cell, and the like.

In another possible implementation, the location information may include a reference location of a neighboring cell, and a second distance threshold between the terminal and the reference location of the neighboring cell. The reference location of the neighboring cell includes but is not limited to a location of a neighboring satellite, a central location of a terrestrial neighboring cell, and the like.

In another possible implementation, the location information may include the reference location of the serving cell, the first distance threshold between the terminal and the reference location of the serving cell, the reference location of the neighboring cell, and the second distance threshold between the terminal and the reference location of the neighboring cell.

The first distance threshold and the second distance threshold may be the same or different, which is not limited in the disclosure.

At step 1702, the network device sends the location information to the terminal.

In a possible implementation, the network device sends a system message including the location information to the terminal.

In another possible implementation, the network device sends an RRC message including the location information to the terminal.

At step 1703, a first distance hysteresis value corresponding to the serving cell and/or a second distance hysteresis value corresponding to the neighboring cell is configured for the terminal.

At step 1704, the network device sends the first distance hysteresis value and/or the second distance hysteresis value to the terminal.

In a possible implementation, the network device may send a system message including the first distance hysteresis value and/or the second distance hysteresis value to the terminal.

In another possible implementation, the network device sends an RRC message including the first distance hysteresis value and/or the second distance hysteresis value to the terminal.

At step 1705, in response to a trigger condition being satisfied, the terminal performs an RRC re-establishment operation and/or a neighboring cell measurement operation.

In a possible implementation, the terminal may determine a first distance value between the terminal and the reference location of the serving cell. In the case that the first distance value is greater than or equal to the first distance threshold, it is determined that the trigger condition is satisfied, and the RRC re-establishment operation and/or the neighboring cell measurement operation is performed.

In another possible implementation, the terminal may determine a second distance value between the terminal and the reference location of the neighboring cell. In the case that the second distance value is less than or equal to the second distance threshold, it is determined that the trigger condition is satisfied, and the RRC re-establishment operation and/or the neighboring cell measurement operation is performed.

In another possible implementation, in the case that the first distance value is greater than or equal to the first distance threshold, and the second distance value is less than or equal to the second distance threshold, it is determined that the trigger condition is satisfied, and the RRC re-establishment operation and/or the neighboring cell measurement operation is performed.

In the foregoing embodiments, a new trigger condition for triggering the terminal to perform the RRC re-establishment operation and/or the neighboring cell measurement operation is provided, so that the probability of terminal service interruption is reduced, and the continuity of a terminal service of NTN is improved, with high availability.

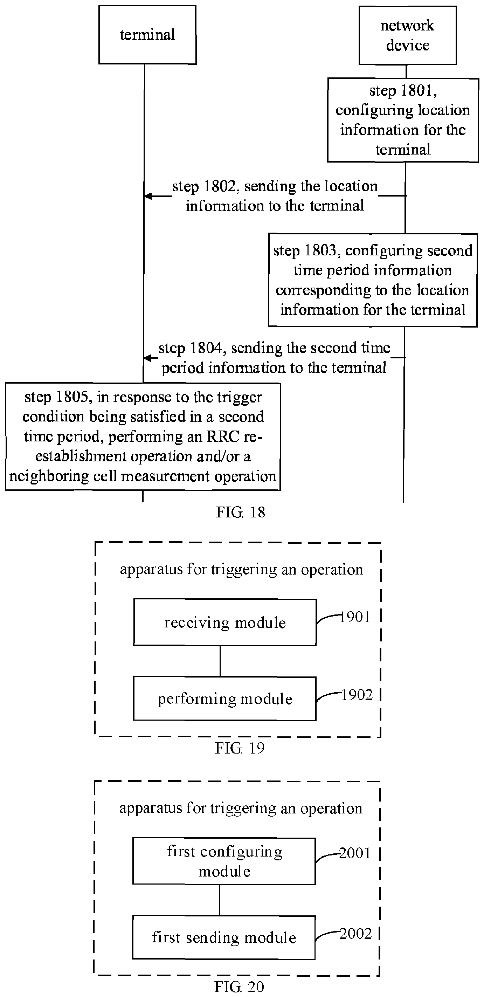

In some optional embodiments, referring to FIG 18, FIG 18 is a flowchart illustrating a method for triggering an operation according to an embodiment. The method may include the following steps.

At step 1801, a network device configures location information for a terminal.

In a possible implementation, the location information may reuse a location parameter in the related art, or the location information may be a newly defined location parameter in a protocol, which is not limited in the disclosure.

In a possible implementation, the location information may include a reference location of a serving cell, and a first distance threshold between the terminal and the reference location of the serving cell. The reference location of the serving cell includes but is not limited to a location of a serving satellite, a central location of a terrestrial serving cell, and the like.

In another possible implementation, the location information may include a reference location of a neighboring cell, and a second distance threshold between the terminal and the reference location of the neighboring cell. The reference location of the neighboring cell includes but is not limited to a location of a neighboring satellite, a central location of a terrestrial neighboring cell, and the like.

In another possible implementation, the location information may include the reference location of the serving cell, the first distance threshold between the terminal and the reference location of the serving cell, the reference location of the neighboring cell, and the second distance threshold between the terminal and the reference location of the neighboring cell.

The first distance threshold and the second distance threshold may be the same or different, which is not limited in the disclosure.

At step 1802, the network device sends the location information to the terminal.

In a possible implementation, the network device sends a system message including the location information to the terminal.

In another possible implementation, the network device sends an RRC message including the location information to the terminal.

At step 1803, the network device configures second time period information corresponding to the location information for the terminal.

At step 1804, the network device sends the second time period information to the terminal.

In a possible implementation, the network device sends a system message including the second time period information to the terminal.

In another possible implementation, the network device sends an RRC message including the second time period information to the terminal.

At step 1805, in response to the trigger condition being satisfied in a second time period, an RRC re-establishment operation and/or a neighboring cell measurement operation is performed.

In the foregoing embodiments, in a case that the terminal determines that the trigger condition is satisfied in the second time period, the terminal performs the RRC re-establishment operation and/or the neighboring cell measurement operation. A new trigger condition for triggering the terminal to perform the RRC re-establishment operation and/or the neighboring cell measurement operation is provided, reducing the probability of terminal service interruption, preventing the terminal from frequently perform the RRC re-establishment operation and/or neighboring cell measurement operation, and reducing energy consumption of the terminal, with high availability.

The method provided by the disclosure is further illustrated as following examples.
1. New time information is introduced, and a terminal determines a trigger condition for triggering the terminal to perform an RRC re-establishment operation and/or a neighboring cell measurement operation based on the time information.
2. The time information is used to indicate target information, and the target information is:
   A. a first time point t-service at which a serving cell ends a service; or,
   B. a second time point T at which the terminal is triggered to perform the RRC re-establishment operation and/or the neighboring cell measurement operation.
3. The time information may be configured for the terminal by a network device through a system message and/or an RRC message.
4. When the target time point arrives or before the target time point arrives, the terminal may determine that the trigger condition is satisfied, and perform the RRC re-establishment operation and/or the neighboring cell measurement operation. For example, when the first time point t-service arrives, the terminal performs the RRC re-establishment operation and/or the neighboring cell measurement operation.
5. In the case of being in a first time period, the terminal determines that the trigger condition is satisfied, and performs the RRC re-establishment operation and/or the neighboring cell measurement operation. For example, the network device may further configure a time offset value Toffset corresponding to the first time point for the terminal. The terminal performs the RRC reconstruction operation and/or the neighboring cell measurement operation within the first time period of {t-service - Toffset, t-service}.
   Alternatively, the network device may further configure a start time point T1 corresponding to the second time point. The terminal performs the RRC re-establishment operation and/or the neighboring cell measurement operation within the first time period of {T1, T}.
6. The terminal determines a trigger condition based on the above time information. In the case that the trigger condition for the RRC re-establishment operation is satisfied, and the terminal is not triggered to perform handover, the terminal performs the RRC re-establishment operation. In a case that the terminal does not receive an RRC re-configuration message used to perform the handover sent by the network device, it is determined that the terminal is not triggered to perform the handover. For example, in the case that the terminal does not receive the RRC ReconfigurationWithSync (RRC re-configuration) message including mobility control information sent by the network device, and/or the terminal does not receive the RRC re-configuration message including information for accessing a target cell, it is determined that the terminal is not triggered to perform the handover.
   Alternatively, in the case that the CHO is not triggered, it is determined that the terminal is not triggered to perform the handover.
7. The time information may be a relative time, and used to indicate a target duration. The target duration includes any one of the following: a first duration in which the serving cell provides a service, or a second duration used to trigger the terminal to perform the RRC re-establishment operation and/or the neighboring cell measurement operation.

For example, when the terminal receives an RRC message including the time information, a timer is started. A timing duration of the timer is equal to the target duration. When the timer expires, the terminal determines that the trigger condition is satisfied, and performs the RRC re-establishment operation and/or the neighboring cell measurement operation.

It should be noted that solutions 4, 5, and 7 in the foregoing solutions are parallel solutions, and may be alternatively performed.

The foregoing embodiments are for the cases that the target information is the time information. Examples in which the target information is location information are described below.
8. The location information is introduced, and the terminal determines the trigger condition for triggering the terminal to perform the RRC re-establishment operation and/or the neighboring cell measurement operation based on the location information.
9. The location information includes a reference location of a serving cell and a first distance threshold between the terminal and the reference location of the serving cell; and/or, a reference location of a neighboring cell and a second distance threshold between the terminal and the reference location of the neighboring cell.
10. The location information may be sent by the network device to the terminal through a system message and/or an RRC message.
11. When a first distance value between the terminal and the reference location of the serving cell is greater than or equal to the first distance threshold, the terminal determines that the trigger condition is satisfied, and performs the RRC re-establishment operation and/or the neighboring cell measurement operation.
12. When a second distance value between the terminal and the reference location of the neighboring cell is less than or equal to the second distance threshold, the terminal determines that the trigger condition is satisfied, and performs the RRC re-establishment operation and/or the neighboring cell measurement operation.
13. When the first distance value is greater than or equal to the first distance threshold, and the second distance value is less than or equal to the second distance threshold, the terminal determines that the trigger condition is satisfied, and performs the RRC re-establishment operation and/or the neighboring cell measurement operation.

It should be noted that solutions 11, 12, and 13 in the foregoing solutions are parallel solutions, and may be alternatively performed.

14. The first distance threshold and the second distance threshold may be the same or different.

15. The network device may configure a distance hysteresis value for the terminal.

For example, a first sum value of a first distance hysteresis value and the first distance value between the terminal and the reference location of the serving cell is greater than or equal to the first distance threshold, and the RRC re-establishment operation and/or the neighboring cell measurement operation is performed.

For another example, a second distance value between the terminal and the reference location of the neighboring cell is less than or equal to the second distance threshold, the RRC re-establishment operation and/or the neighboring cell measurement operation is performed.

For another example, the first distance value is greater than or equal to the first distance threshold, and the second distance value is less than or equal to the second distance threshold, the RRC re-establishment operation and/or the neighboring cell measurement operation is performed.

16. The terminal determines the trigger condition based on the above location information. In the case that the trigger condition for the RRC re-establishment operation is satisfied, and the terminal is not triggered to perform the handover, the terminal performs the RRC re-establishment operation. In a case that the terminal does not receive an RRC re-configuration message used to perform the handover sent by the network device, it is determined that the terminal is not triggered to perform the handover.

17. The trigger condition is satisfied in the second time period, the terminal performs the RRC re-establishment operation and/or the neighboring cell measurement operation. The second time period information is configured by the network device and sent to the terminal. For example, the TTT is configured by the network. When the above trigger condition is always satisfied within the TTT, the terminal performs the RRC re-establishment operation and/or the neighboring cell measurement operation.

In the foregoing embodiments, the new trigger condition for triggering the terminal to perform the RRC re-establishment operation and/or the neighboring cell measurement operation is provided, so that the probability of the terminal service interruption is reduced, and the continuity of the terminal service of the NTN is improved, with high availability.

Corresponding to foregoing method embodiments for an application function, the disclosure further provides apparatus embodiments for an application function.

Referring to FIG 19, FIG 19 is a block diagram illustrating an apparatus for triggering an operation according to an embodiment. The apparatus is applied to a terminal, and includes:
a receiving module 1901, configured to receive target information sent by a network device; in which the target information is used by the terminal to determine a trigger condition for triggering an RRC re-establishment operation and/or a neighboring cell measurement operation; and
a performing module 1902, configured to perform the RRC re-establishment operation and/or the neighboring cell measurement operation in response to the trigger condition being satisfied.

In some optional embodiments, the receiving module includes at least one of:
a first receiving submodule, configured to receive a system message including the target information sent by the network device; or
a second receiving submodule, configured to receive an RRC message including the target information sent by the network device.

In some optional embodiments, the target information includes time information or location information.

In some optional embodiments, the time information is used to indicate a target time point. The target time point includes any one of the following:
a first time point at which a serving cell ends a service; or,
a second time point at which the terminal is triggered to perform the RRC re-establishment operation and/or the neighboring cell measurement operation.

In some optional embodiments, the performing module includes any one of the following:
a first performing submodule, configured to perform the RRC re-establishment operation and/or the neighboring cell measurement operation in response to an arrival of the target time point indicated by the time information; or
a second performing submodule, configured to perform the RRC re-establishment operation and/or the neighboring cell measurement operation before the arrival of the target time point indicated by the time information.

In some optional embodiments, the apparatus further includes:
a determining module, configured to determine a first time period based on association time information and the target time point; in which the association time information is used to indicate a time offset value corresponding to the target time point.

The performing module further includes:
a third performing submodule, configured to perform the RRC re-establishment operation and/or the neighboring cell measurement operation in the first time period.

In some optional embodiments, the association time information is used to indicate a time offset value corresponding to the first time point.

The determining module includes:
a first determining submodule, configured to determine a start time point of the first time period based on a difference between the first time point and the time offset value corresponding to the first time point; and
a second determining submodule, configured to determine an end time point of the first time period based on the first time point.

In some optional embodiments, the association time information is used to indicate a start time point corresponding to the second time point.

The determining module includes:
a third determining submodule, configured to determine a time period from the start time point indicated by the association time information to the second time point as the first time period.

In some optional embodiments, the time information is used to indicate a target duration. The target duration includes any one of the following:
a first duration in which the serving cell provides the service; or,
a second duration used to trigger the terminal to perform the RRC re-establishment operation and/or the neighboring cell measurement operation.

In some optional embodiments, the apparatus further includes:
a starting module, configured to start a timer in response to receiving an RRC message including the time information sent by the network device. A timing duration of the timer is equal to the target duration indicated by the time information.

The performing module further includes:
a fourth performing submodule, configured to perform the RRC re-establishment operation and/or the neighboring cell measurement operation in response to determining that the timer expires.

In some optional embodiments, the location information includes:
a reference location of a serving cell and a first distance threshold between the terminal and the reference location of the serving cell; and/or,
a reference location of a neighboring cell and a second distance threshold between the terminal and the reference location of the neighboring cell.

In some optional embodiments, the performing module includes any one of the following:
a fifth performing submodule, configured to perform the RRC re-establishment operation and/or the neighboring cell measurement operation in response to determining that a first distance value between the terminal and the reference location of the serving cell is greater than or equal to the first distance threshold;
a sixth performing submodule, configured to perform the RRC re-establishment operation and/or the neighboring cell measurement operation in response to determining that the second distance value between the terminal and the reference location of the neighboring cell is less than or equal to the second distance threshold; or
a seventh performing submodule, configured to perform the RRC re-establishment operation and/or the neighboring cell measurement operation in response to determining that the first distance value is greater than or equal to the first distance threshold, and the second distance value is less than or equal to the second distance threshold.

In some optional embodiments, the performing module includes any one of the following:
an eighth performing submodule, configured to perform the RRC re-establishment operation and/or the neighboring cell measurement operation in response to determining that a first sum value of a first distance hysteresis value and the first distance value between the terminal and the reference location of the serving cell is greater than or equal to the first distance threshold;
a ninth performing submodule, configured to perform the RRC re-establishment operation and/or the neighboring cell measurement operation in response to determining that a second sum value of a second distance hysteresis value and the second distance value between the terminal and the reference location of the neighboring cell is less than or equal to the second distance threshold; or
a tenth performing submodule, configured to perform the RRC re-establishment operation and/or the neighboring cell measurement operation in response to determining that the first sum value is greater than or equal to the first distance threshold, and the second sum value is less than or equal to the second distance threshold.

In some optional embodiments, when the target information includes the location information, the performing module includes:
an eleventh performing submodule, configured to perform the RRC re-establishment operation and/or the neighboring cell measurement operation in response to the trigger condition being satisfied within a second time period.

In some optional embodiments, the performing module includes:
a twelfth performing submodule, configured to perform the RRC re-establishment operation in response to a trigger condition for triggering the RRC re-establishment operation being satisfied and the terminal being not triggered to perform handover.

In some optional embodiments, the twelfth performing submodule further includes any one of the following:
a first determining unit, configured to determine that an RRC re-configuration message used to perform the handover sent by the network device is not received; or
a second determining unit, configured to determine that CHO is not triggered.

Referring to FIG 20, FIG 20 is a block diagram illustrating an apparatus for triggering an operation according to an embodiment. The apparatus is applied to a network device, and includes:
a first configuring module 2001, configured to configure target information for a terminal; in which the target information is used by the terminal to determine a trigger condition for triggering an RRC re-establishment operation and/or a neighboring cell measurement operation; and
a first sending module 2002, configured to send the target information to the terminal.

In some optional embodiment, the first sending module includes at least one of the following:
a first sending submodule, configured to send a system message including the target information to the terminal; or
a second sending submodule, configured to send an RRC message including the target information to the terminal.

In some optional embodiments, the target information includes time information or location information.

In some optional embodiments, the time information is used to indicate a target time point. The target time point includes any one of the following:
a first time point at which a serving cell ends a service; or,
a second time point used to trigger the terminal to perform a target operation.

In some optional embodiments, the apparatus further includes:
a second configuring module, configured to configure association time information for the terminal. The association time information is used to indicate a time offset value corresponding to the target time point; and
a second sending module, configured to send the association time information to the terminal.

In some optional embodiments, the time information is used to indicate a target duration. The target duration includes any one of the following:
a first duration in which the serving cell provides the service; or,
a second duration used to trigger the terminal to perform the target operation.

In some optional embodiments, the location information includes:
a reference location of a serving cell and a first distance threshold between the terminal and the reference location of the serving cell; and/or,
a reference location of a neighboring cell and a second distance threshold between the terminal and the reference location of the neighboring cell.

In some optional embodiments, the apparatus further includes:
a third configuring module, configured to configure a first distance hysteresis value corresponding to the serving cell and/or a second distance hysteresis value corresponding to the neighboring cell for the terminal; and
a third sending module, configured to send the first distance hysteresis value and/or the second distance hysteresis value to the terminal.

In some optional embodiments, the apparatus further includes:
a fourth configuring module, configured to configure second time period information corresponding to the location information for the terminal; and
a fourth sending module, configured to send the second time information to the terminal.

Embodiments of the apparatus may refer to part descriptions of the method embodiments they correspond to the method embodiments. Embodiments of the apparatus described above are only schematic, in which the above units described as separate parts may or may not be physically separated, the parts shown as units may or may not be physical units, which may be located in one place, or may be distributed to multiple network units. Some or all modules may be selected according to the actual requirements to achieve the purpose of the present disclosure. Those skilled in the art may understand and implement it without any creative effort.

Correspondingly, the disclosure further provides a computer-readable storage medium, the storage medium stores a computer program, and the computer program is configured to execute any one of foregoing methods for triggering an operation at the terminal side.

Correspondingly, the disclosure further provides a computer-readable storage medium, the storage medium stores a computer program, and the computer program is configured to execute any one of foregoing methods for triggering an operation of at the network device side.

Accordingly, a device for triggering an operation is provided in the disclosure, and includes:
a processor;
a memory configured to store instructions executable by the processor;
in which, the processor is configured to execute any one of methods for triggering an operation at the terminal side.

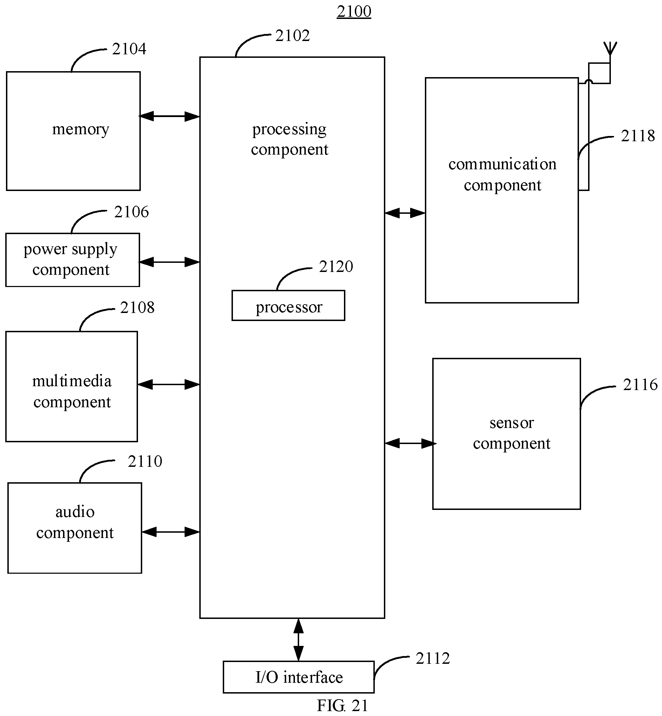

FIG 21 is a block diagram illustrating a device 2100 for triggering an operation according to an embodiment. For example, the device 2100 for triggering an operation may be a terminal such as a mobile phone, a tablet computer, an e-book reader, a multimedia playing device, a wearable device, a vehicle-mounted user equipment, an ipad, and a smart television, etc.

Referring to FIG 21, the device 2100 may include one or more of following components: a processing component 2102, a memory 2104, a power supply component 2106, a multimedia component 2108, an audio component 2110, an input/output (I/O) interface 2112, a sensor component 2116, and a communication component 2118.

The processing component 2102 generally controls the whole operation of the device 2100, such as the operations related to display, phone call, data random access, camera operation and recording operation. The processing component 2102 may include one or more processors 2120 to perform instructions, to complete all or part of steps of the above method for triggering an operation. In addition, the processing component 2102 may include one or more modules that facilitate interaction between the processing component 2102 and other components. For example, the processing component 2102 may include a multimedia module to facilitate interaction between the multimedia component 2108 and the processing component 2102. For example, the processing component 2102 may read executable instructions from the memory to implement the steps of the method for triggering an operation provided in the above embodiments.

The memory 2104 is configured to store various types of data to support the operation of the device 2100. Examples of the data include the instructions of any applications or methods operated on the device 2100, contact data, phone book data, messages, pictures, videos, etc. The memory 2104 may be implemented by any type of volatile or non-volatile storage devices or their combinations, such as a stationary random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 2106 may provide power supply for various components of the device 2100. The power supply component 2106 may include a power supply management system, one or more power supplies, and other units related to generating, managing and distributing power for the device 2100.

The multimedia component 2108 includes a display screen providing an output interface between the device 2100 and a user. In some embodiments, the multimedia component 2108 includes a front camera and/or a rear camera. When the apparatus 2100 is in operation mode, such as shooting mode or video mode, the front camera or the rear camera may receive the external multimedia data. Each front camera and rear camera may be a fixed optical lens system or an optical lens system with a focal length and optical zoom capacity.

The audio component 2110 is configured to output and/or input audio signals. For example, the audio component 2110 includes a microphone (MIC). When the device 2100 is in operation mode, such as a call mode, a recording mode, and speech recognition mode, the microphone is configured to receive the external audio signals. The audio signals received may be further stored in the memory 2104 or sent via the communication component 2118. In some embodiments, the audio component 2110 further includes a speaker configured to output an audio signal.

The I/O interface 2112 provides an interface between the processing component 2102 and a peripheral interface module, such as a keyboard, a click wheel, a button, etc. The buttons may include but not limited to a home button, a volume button, a start button and a locking button.

The sensor component 2116 includes one or more sensors, configured to provide various aspects of status assessment for the device 2100. For example, the sensor component 2116 may detect an on/off state of the device 2100 and the relative positioning of the components, such as the display and a keypad of the device 2100, a location change of the device 2100 or a component of the device 2100, a presence or absence of a user contact with the device 2100, an orientation or an acceleration/deceleration of the device 2100, and a temperature change of the device 2100. The sensor component 2116 may include a proximity sensor, which is configured to detect the existence of the objects nearby without any physical contact. The sensor component 2116 may further include a light sensor such as a Complementary Metal Oxide Semiconductor (CMOS) or Charge-Coupled Device (CCD) image sensor, which is configured to use in imaging applications. In some embodiments, the sensor component 2116 may further include an acceleration transducer, a gyroscope sensor, a magnetic sensor, a pressure sensor or a temperature sensor.

The communication component 2118 is configured to facilitate wired or wireless communication between the device 2100 and other devices. The device 2100 may access a wireless network based on communication standard, such as Wi-Fi, 2G, 3G, 4G, 5G or 6G, or their combinations. In an embodiment, the communication component 2118 receives broadcast signals from an external broadcast management system or broadcast-related information via a broadcast channel. In an exemplary embodiment, the communication component 2118 further includes a near field communication (NFC) module to facilitate short-range communication. For example, an NFC module may be implemented based on radio frequency identification (RFID) technology, infrared data association (IRDA) technology, ultra-wideband (UWB) technology, bluetooth (BT) technology and other technologies.

In an embodiment, the device 2100 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method at the terminal side.

In an embodiment, a non-transitory machine-readable storage medium is further provided which includes instructions, such as the memory 2104 including instructions. The instructions may be executed by the processor 2120 of the device 2100 to implement the above methods for triggering an operation. For example, the non-transitory computer readable storage medium may be a ROM, a random access memory (RAM), a CD-ROM, a magnetic tape, a floppy disk, an optical data storage device, etc.

Accordingly, a device for triggering an operation is provided in the disclosure, and includes:
a processor;
a memory configured to store instructions executable by the processor;
in which, the processor is configured to execute any of methods for triggering an operation in a network device.

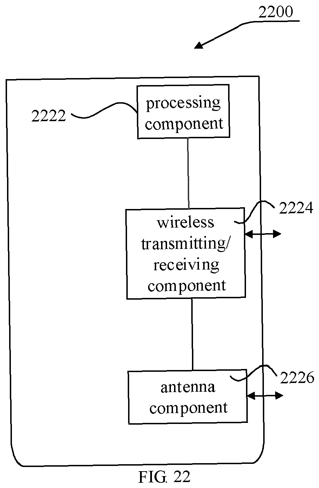

As shown in FIG 22, FIG 22 is a block diagram illustrating a device 2200 for triggering an operation according to an embodiment. For the device 2200 may be provided as a network device. Referring to FIG 22, the device 2200 includes a processing component 2222, a wireless transmitting/receiving component 2224, an antenna component 2226, and a signal processing unit peculiar to a wireless interface, and the processing component 2222 may further include at least one processor.

One processor in the processing component 2222 may be configured to perform any one of above methods for triggering an operation at the network device side.

After considering the specification and practicing the disclosure herein, those skilled in the art will easily think of other implementations. The disclosure is intended to cover any variations, usages, or adaptive changes of the disclosure. These variations, usages, or adaptive changes follow the general principles of the disclosure and include common knowledge or conventional technical means in the technical field not disclosed by the disclosure. The description and embodiments are to be regarded as exemplary only, and the true scope and spirit of the present disclosure are given by the appended claims.

It should be understood that the present disclosure is not limited to the precise structure described above and shown in the drawings, and various modifications and changes may be made without departing from its scope. The scope of the present disclosure is only limited by the appended claims. The scope of the present application is only limited by the appended claims.

## Claims

1. A method for triggering an operation, performed by a terminal, comprising:
receiving target information sent by a network device; wherein the target information is used by the terminal to determine a trigger condition for triggering a radio resource control (RRC) re-establishment operation and/or a neighboring cell measurement operation; and
in response to the trigger condition being satisfied, performing the RRC re-establishment operation and/or the neighboring cell measurement operation.

2. The method of claim 1, wherein receiving the target information sent by the network device comprises at least one of the following:
receiving a system message comprising the target information sent by the network device; or
receiving an RRC message comprising the target information sent by the network device.

3. The method of claim 1, wherein the target information comprises time information or location information.

4. The method of claim 3, wherein the time information is used to indicate a target time point, and the target time point comprises any one of the following:
a first time point at which a serving cell ends a service; or
a second time point used to trigger the terminal to perform the RRC re-establishment operation and/or the neighboring cell measurement operation.

5. The method of claim 4, wherein in response to the trigger condition being satisfied, performing the RRC re-establishment operation and/or the neighboring cell measurement operation comprises any one of the following:
in response to an arrival of the target time point indicated by the time information, performing the RRC re-establishment operation and/or the neighboring cell measurement operation; or
performing the RRC re-establishment operation and/or the neighboring cell measurement operation before an arrival of the target time point indicated by the time information.

6. The method of claim 4, further comprising:
determining a first time period based on association time information and the target time point; wherein the association time information is used to indicate a time offset value corresponding to the target time point;
wherein, in response to the trigger condition being satisfied, performing the RRC re-establishment operation and/or the neighboring cell measurement operation comprises:
performing the RRC re-establishment operation and/or the neighboring cell measurement operation in the first time period.

7. The method of claim 6, wherein the association time information is used to indicate a time offset value corresponding to the first time point;
determining the first time period based on the association time information and the target time point comprises:
determining a start time point of the first time period based on a difference between the first time point and the time offset value corresponding to the first time point; and
determining an end time point of the first time period based on the first time point.

8. The method of claim 6, wherein, the association time information is used to indicate a start time point corresponding to the second time point;
determining the first time period based on the association time information and the target time point comprises:
determining a time period from the start time point indicated by the association time information to the second time point as the first time period.

9. The method of claim 3, wherein the time information is used to indicate a target duration, and the target duration comprises any one of the following:
a first duration in which a serving cell provides a service; or,
a second duration used to trigger the terminal to perform the RRC re-establishment operation and/or the neighboring cell measurement operation.

10. The method of claim 9, further comprising:
in response to receiving an RRC message comprising the time information sent by the network device, starting a timer; wherein a timing duration of the timer is equal to the target duration indicated by the time information; and
in response to the trigger condition being satisfied, performing the RRC re-establishment operation and/or the neighboring cell measurement operation comprises:
in response to determining that the timer expires, performing the RRC re-establishment operation and/or the neighboring cell measurement operation.

11. The method of claim 3, wherein the location information comprises:
a reference location of a serving cell, and a first distance threshold between the terminal and the reference location of the serving cell; and/or,
a reference location of a neighboring cell, and a second distance threshold between the terminal and the reference location of the neighboring cell.

12. The method of claim 11, wherein in response to the trigger condition being satisfied, performing the RRC re-establishment operation and/or the neighboring cell measurement operation comprises any one of the following:
in response to determining that a first distance value between the terminal and the reference location of the serving cell is greater than or equal to the first distance threshold, performing the RRC re-establishment operation and/or the neighboring cell measurement operation;
in response to determining that a second distance value between the terminal and the reference location of the neighboring cell is less than or equal to the second distance threshold, performing the RRC re-establishment operation and/or the neighboring cell measurement operation; or
in response to determining that the first distance value is greater than or equal to the first distance threshold, and the second distance value is less than or equal to the second distance threshold, performing the RRC re-establishment operation and/or the neighboring cell measurement operation.

13. The method of claim 11, wherein in response to the trigger condition being satisfied, performing the RRC re-establishment operation and/or the neighboring cell measurement operation comprises any one of the following:
in response to determining that a first sum value of a first distance hysteresis value and a first distance value between the terminal and the reference location of the serving cell is greater than or equal to the first distance threshold, performing the RRC re-establishment operation and/or the neighboring cell measurement operation;
in response to determining that a second sum value of a second distance hysteresis value and a second distance value between the terminal and the reference location of the neighboring cell is less than or equal to the second distance threshold, performing the RRC re-establishment operation and/or the neighboring cell measurement operation; or
in response to determining that the first sum value is greater than or equal to the first distance threshold, and the second sum value is less than or equal to the second distance threshold, performing the RRC re-establishment operation and/or the neighboring cell measurement operation.

14. The method of claim 3, wherein, in a case that the target information comprises the location information, in response to the trigger condition being satisfied, performing the RRC re-establishment operation and/or the neighboring cell measurement operation comprises:
in response to the trigger condition being satisfied in a second time period, performing the RRC re-establishment operation and/or the neighboring cell measurement operation.

15. The method of any one of claim 1-14, wherein in response to the trigger condition being satisfied, performing the RRC re-establishment operation comprises:
in response to a trigger condition for triggering the RRC re-establishment operation being satisfied and the terminal being not triggered to perform handover, performing the RRC re-establishment operation.

16. The method of claim 15, wherein the terminal being not triggered to perform the handover comprises any one of the following:
not receiving an RRC re-configuration message used to perform the handover sent by the network device; or
not triggering Conditional HandOver (CHO).

17. A method for triggering an operation, performed by a network device, comprising:
configuring target information for a terminal; wherein the target information is used by the terminal to determine a trigger condition for triggering a radio resource control (RRC) re-establishment operation and/or a neighboring cell measurement operation; and
sending the target information to the terminal.

18. The method of claim 17, sending the target information to the terminal comprises at least one of:
sending a system message comprising the target information to the terminal; or
sending an RRC message comprising the target information to the terminal.

19. The method of claim 17, wherein the target information comprises time information or location information.

20. The method of claim 19, wherein the time information is used to indicate a target time point, and the target time point comprises any one of the following:
a first time point at which a serving cell ends a service; or,
a second time point used to trigger the terminal to perform a target operation.

21. The method of claim 20, further comprising:
configuring association time information for the terminal; wherein the association time information is used to indicate a time offset value corresponding to the target time point; and
sending the association time information to the terminal.

22. The method of claim 19, wherein the time information is used to indicate a target duration, and the target duration comprises any one of the following:
a first duration in which a serving cell provides a service; or,
a second duration used to trigger the terminal to perform a target operation.

23. The method of claim 19, wherein the location information comprises:
a reference location of a serving cell, and a first distance threshold between the terminal and the reference location of the serving cell; and/or,
a reference location of a neighboring cell, and a second distance threshold between the terminal and the reference location of the neighboring cell.

24. The method of claim 22, further comprising:
configuring a first distance hysteresis value corresponding to the serving cell and/or a second distance hysteresis value corresponding to a neighboring cell for the terminal; and
sending the first distance hysteresis value and/or the second distance hysteresis value to the terminal.

25. The method of claim 22, further comprising:
configuring second time period information corresponding to the location information for the terminal; and
sending the second time period information to the terminal.

26. An apparatus for triggering an operation, applied to a terminal, comprising:
a receiving module, configured to receive target information sent by a network device; wherein the target information is used by the terminal to determine a trigger condition for triggering a radio resource control (RRC) re-establishment operation and/or a neighboring cell measurement operation; and
a performing module, configured to perform the RRC re-establishment operation and/or the neighboring cell measurement operation in response to the trigger condition being satisfied.

27. An apparatus for triggering an operation, applied to a network device, comprising:
a first configuring module, configured to configure target information for a terminal; wherein the target information is used by the terminal to determine a trigger condition for triggering a radio resource control (RRC) re-establishment operation and/or a neighboring cell measurement operation; and
a first sending module, configured to send the target information to the terminal.

28. A computer-readable storage medium, wherein the storage medium stores a computer program, and the computer program is configured to implement the method for triggering an operation according to any one of claims 1-16.

29. A computer-readable storage medium, wherein the storage medium stores a computer program, and the computer program is configured to implement the method for triggering an operation according to any one of claims 17-25.

30. A device for triggering an operation, comprising:
a processor;
a memory configured to store instructions executable by the processor;
wherein, the processor is configured to execute the instructions to implement the method for triggering an operation according to any one of claims 1-16.

31. A device for triggering an operation, comprising:
a processor;
a memory configured to store instructions executable by the processor;
wherein, the processor is configured to execute the instructions to implement the method for triggering an operation according to any one of claims 17-26.
